(19) Europäisches Patentamt
European Patent Office
Office européen des brevets

(11) **EP 4 160 106 A1**

(12) **EUROPEAN PATENT APPLICATION**

(43) Date of publication:
**05.04.2023 Bulletin 2023/14**

(21) Application number: **22194423.4**

(22) Date of filing: **07.09.2022**

(51) International Patent Classification (IPC):
*F24F 13/08* (2006.01)      *G06Q 50/08* (2012.01)

(52) Cooperative Patent Classification (CPC):
**F24F 13/082; G06Q 50/08**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **01.10.2021 FI 20216024**

(71) Applicant: **Climecon OY**
**00880 Helsinki (FI)**

(72) Inventor: **HUUSKONEN, Esa**
**02630 Espoo (FI)**

(74) Representative: **Berggren Oy**
**P.O. Box 16**
**Eteläinen Rautatiekatu 10A**
**00101 Helsinki (FI)**

(54) **METHOD AND COMPUTER PROGRAM PRODUCT FOR SELECTING VENTILATION GRILL MODULES TO AN INTAKE OPENING OF A VENTILATION SYSTEM**

(57)     The method for selecting ventilation grill modules to an intake opening of a ventilation system comprises steps of defining dimensions of said intake opening (10), determining a design air flow value through said intake opening, choosing a group of potential ventilation grill modules and selecting the ventilation grill modules to said intake opening. The method further comprises steps of determining at least one first potential grill module assembly to said intake opening including a first number of first grill modules (1), defining first dimensions of said first ventilation grill modules, evaluating performance of each potential ventilation grill module having first dimensions and selecting the ventilation grill modules to said intake opening based on said evaluation. The computer program product for selecting ventilation grill modules comprises code means configured to perform the steps of the method, when the program is executed in a computer.

```
defining dimensions of an intake
opening
        │
        ▼
determining a design air flow through
said intake opening
        │
        ▼
choosing a group of potentional
ventilation grill modules
        │
        ▼
determinining at least one potential
grill module assembly including first
number of first grill modules
        │
        ▼
defining first dimension of said first
ventilation grill modules
        │
        ▼
evaluating performance of each potential
ventilation grill module having first
dimension
        │
        ▼
selecting the ventilation grill modules
to said intake opening based on said
evaluation
```

Fig. 2

EP 4 160 106 A1

**Description**

**Technical Field**

The invention relates to a method for selecting ventilation grill modules to an intake opening of a ventilation system, said method comprising steps of defining dimensions of said intake opening, determining a design air flow value through said intake opening, choosing a group of potential ventilation grill modules and selecting the ventilation grill modules to said intake opening from said group of potential ventilation grill modules. The invention further relates to a computer program product, comprising code means configured to perform the steps of the method according to the invention, when the program is executed in a processor of a computer.

**Background Art**

Large buildings are nowadays equipped with forced ventilation systems. An important part of the ventilation system is an intake opening, through which fresh air flows into a ventilation duct leading to the air supply unit of the ventilation system. The intake opening is usually in an outer wall of the building. The intake opening is covered with ventilation grill modules, which allow fresh air to flow through, but prevent trash, small animals or birds entering to the intake opening. An important function of the ventilation grill modules is to prevent rainwater and snow entering the ventilation system through intake opening.

In large buildings the size of the intake opening of the ventilation system may be several square meters and a number of ventilation grill modules is used to cover the intake opening. The intake opening can be covered with different kind of ventilation grill module combinations, the number, size and louvre type of modules in these combinations being different. The size, type and orientation of the individual ventilation grill modules usually affects to the properties, such as pressure loss, noise level and storm-water retention efficiency of the whole ventilation grill assembly. Each ventilation grill module has mounting flanges on the edges of the module, which mounting flanges reduce the effective inflow area of the ventilation grill assembly. Thus, selecting an optimal ventilation grill assembly to the intake opening is a complicated optimization task. However, at the moment there is no proper methods or tools for designing the ventilation grill assemblies for intake openings on the market.

An object of the invention is to provide a method and computer program product for selecting ventilation grill modules to an intake opening of a ventilation system, by which method and computer program product drawbacks related to the prior art can be reduced.

The object of the invention is achieved with a method and computer program product which are characterized in what is disclosed in the independent patent claims. Some preferred embodiments of the invention are disclosed in the dependent claims.

**Brief summary of the invention**

The method according to the invention for selecting ventilation grill modules to an intake opening of a ventilation system comprises steps of defining dimensions of said intake opening, determining a design airflow value through said intake opening, choosing a group of potential ventilation grill modules and selecting the ventilation grill modules to said intake opening from said group of potential ventilation grill modules. The method further comprises steps of determining at least one first potential grill module assembly to said intake opening, which first potential grill module assembly includes a first number of first grill modules, defining first dimensions of said first ventilation grill modules, evaluating performance of each potential ventilation grill module having first dimensions using said design air flow value and selecting the ventilation grill modules to said intake opening based on said evaluation. Defining the dimensions of the ventilation grill modules means here defining the width and height of the module. These dimensions must be defined in a way, that the intake opening is substantially fully covered with a whole number of ventilation grill modules.

A first preferred embodiment of the method according to the invention further comprises steps of determining at least one second potential grill module assembly to said intake opening, which at least one second potential ventilation grill module assembly includes a second number of second grill modules, defining second dimensions of said second ventilation grill modules, evaluating performance of each potential ventilation grill module having second dimensions using said design air flow value and selecting ventilation grill modules to said intake opening based on said evaluation.

A second preferred embodiment of the method according to the invention further comprises steps of determining at least one third potential grill module assembly to said intake opening, which at least one third potential ventilation grill module assembly includes a third number of third grill modules and a fourth number of fourth grill modules, defining third dimensions for said third ventilation grill modules and fourth dimensions for said fourth ventilation grill modules, evaluating performance of each potential ventilation grill module having third or fourth dimensions using said design air flow value and selecting ventilation grill modules to said intake opening based on said evaluation. In this embodiment the number of third and fourth grill modules is more than zero, i.e. the third potential grill module assembly comprises grill modules having different sizes. Also, the type of the third and fourth ventilation grill modules may be different.

In yet another preferred embodiment of the method according to the invention determining said design air flow value through said intake opening comprises steps of choosing an upper limit value for the noise level of the ventilation grill module assembly and calculating the design air flow through said intake opening, said design air flow causing noise level below said upper limit value. Alternatively, determining said design air flow value through said intake opening may comprise steps of choosing an upper limit value for the pressure loss through said intake opening and calculating the design air flow through said intake opening, said design air flow causing pressure loss below said upper limit value.

Yet another preferred embodiment of the method according to the invention the method further comprises steps of choosing an upper limit value for a face velocity of said intake opening, calculating the face velocity of said intake opening using said design air flow value, checking, that the calculated face velocity of said intake opening is lower than said upper limit value, diminishing the design air flow value, if the calculated face velocity of said intake opening is bigger than said upper limit value, re-calculating the face velocity of said intake opening using said diminished design air flow value and re-checking, that the re-calculated face velocity of said intake opening is lower than said upper limit value.

In yet another preferred embodiment of the method according to the invention evaluating said performance of potential ventilation grill modules and selecting the ventilation modules comprises steps of calculating face velocity for each potential ventilation grill module, choosing an upper limit value for the face velocity of the ventilation grill module, comparing the calculated face velocity of each potential ventilation grill modules to said upper limit value and selecting the ventilation grill module to said intake opening from the group of those potential ventilation grill modules having lower face velocity than said upper limit value. Preferably, the upper limit value for the face velocity of the intake opening and/or of the ventilation grill module is chosen to be 2 m/s, preferably 0,7 m/s.

In yet another preferred embodiment of the method according to the invention evaluating said performance of potential ventilation grill modules and selecting the ventilation modules comprises steps of calculating noise levels for each potential ventilation grill module and selecting the ventilation grill module to said intake opening from the group of those potential ventilation grill modules having one of the lowest calculated noise levels, preferably the lowest calculated noise level.

Alternatively or additionally, evaluating said performance of potential ventilation grill modules and selecting the ventilation modules may comprise steps of calculating pressure loss for each potential ventilation grill module and selecting the ventilation grill module to said intake opening from the group of those potential ventilation grill modules having one of the lowest calculated pressure losses, preferably the lowest calculated press loss.

Alternatively or additionally, evaluating said performance of potential ventilation grill modules and selecting the ventilation modules may comprises step of determining storm-water retention efficiency class for each potential ventilation grill module and selecting the ventilation grill module to said intake opening from the group of those potential ventilation grill modules having one of the highest storm-water retention efficiency classes, preferably the highest storm-water retention efficiency class.

The method may further comprise steps of selecting the potential grill module assembly consisting of the chosen ventilation grill modules to be a designed ventilation grill assembly of said intake opening, identifying said designed ventilation grill assembly, providing information relating to said designed ventilation grill assembly and storing said information to a database. Preferably, the stored information is linked or attached to the planning, order or delivery information of the ventilation system. Providing information relating to said designed ventilation grill assembly may comprise providing installation instructions of said designed ventilation grill assembly to said ventilation opening and/or providing installation instructions for each individual ventilation grill module in the designed grill module assembly. The installation instructions include at least one of the following: location of the ventilation grill module in the designed grill module assembly, orientation of the ventilation grill module in the designed grill module assembly, installation order of the ventilation grill modules in the designed grill module assembly.

The computer program product according to the invention for selecting ventilation grill modules to an intake opening of a ventilation system comprises code means configured to define dimensions of said intake opening, code means configured to determine a design air flow value through said intake opening, code means configured to choose a group of potential ventilation grill modules and code means configured to select the ventilation grill modules to said intake opening from said group of potential ventilation grill modules. Said computer program further comprises code means configured to determine a least one first potential grill module assembly to said intake opening, which first potential grill module assembly includes a first number of first grill modules, code means configured to define first dimensions of said first ventilation grill modules, code means configured to evaluate performance of each potential ventilation grill module having first dimensions using said design air flow value and code means configured to select the ventilation grill modules to said intake opening based on said evaluation.

A first preferred embodiment of the computer program product according to the invention further comprises code means configured to determine at least one second potential grill module assembly to said intake opening, which at least one second potential ventilation grill module assembly includes a second number of second grill modules, code means configured to define second dimensions of said second ventilation grill modules, code means configured to evaluate performance of each potential ventilation grill module having second dimensions using said design air flow value and code means configured to select ventilation grill modules to said intake opening based on said evaluation.

A second preferred embodiment of the computer program product according to the invention further comprises code means configured to determine at least one third potential grill module assembly to said intake opening, which at least one third potential ventilation grill module assembly includes a third number off third grill modules and a fourth number of fourth grill modules, code means configured to define third dimensions for said third ventilation grill modules and fourth dimensions for said fourth ventilation grill modules, code means configured to evaluate performance of each potential ventilation grill module having third or fourth dimensions using said design air flow value and code means configured to select ventilation grill modules to said intake opening based on said evaluation.

In a third preferred embodiment of the computer program product according to the invention said code means configured to determine said design air flow value through said intake opening comprises code means configured to choose an upper limit value for the noise level of the ventilation grill module assembly and calculate the design air flow through said intake opening, said design air flow causing noise level below said upper limit value.

Alternatively in the computer program product according to the invention said code means configured to determine said design air flow value through said intake opening may comprise code means configured to choose an upper limit value for the pressure loss through said intake opening and calculate the design air flow through said intake opening, said design air flow causing pressure loss below said upper limit value.

Yet another preferred embodiment of the computer program product according to the invention further comprises code means configured to choose an upper limit value for a face velocity of said intake opening, code means configured to calculate the face velocity of said intake opening using said design air flow value, code means configured to check, that the calculated face velocity of said intake opening is lower than said upper limit value, code means configured to diminish the design air flow value, if the calculated face velocity of said intake opening is bigger than said upper limit value, code means configured to re-calculate the face velocity of said intake opening using said diminished design air flow value and code means configured to re-check, that the re-calculated face velocity of said intake opening is lower than said upper limit value.

In yet another preferred embodiment of the computer program product according to the invention said code means configured to evaluate the performance of potential ventilation grill modules and to select the ventilation modules comprises code means configured to calculate face velocity for each potential ventilation grill module, choose an upper limit value for the face velocity of the ventilation grill module, compare the calculated face velocity of each potential ventilation grill modules to said upper limit value and select the ventilation grill module to said intake opening from the group of those potential ventilation grill modules having lower face velocity than said upper limit value. Preferably, the code means are configured to set the upper limit value for the face velocity of the intake opening and/or of the ventilation grill module to be 2 m/s, more preferably 0,7 m/s.

In yet another preferred embodiment of the computer program product according to the invention said code means configured to evaluate said performance of potential ventilation grill modules and to select the ventilation modules comprises code means configured to calculate noise levels for each potential ventilation grill module and select the ventilation grill module to said intake opening from the group of those potential ventilation grill modules having one of the lowest calculated noise levels, preferably the lowest calculated noise level.

In yet another preferred embodiment of the computer program product according to the invention said code means configured to evaluate said performance of potential ventilation grill modules and to select the ventilation modules comprises code means configured to calculate pressure loss for each potential ventilation grill module and select the ventilation grill module to said intake opening from the group of those potential ventilation grill modules having one of the lowest calculated pressure losses, preferably the lowest calculated press loss.

In yet another preferred embodiment of the computer program product according to the invention said code means configured to evaluate said performance of potential ventilation grill modules and to select the ventilation modules comprises code means configured to determine storm-water retention efficiency class for each potential ventilation grill module and select the ventilation grill module to said intake opening from the group of those potential ventilation grill modules having one of the highest storm-water retention efficiency classes, preferably the highest storm-water retention efficiency class.

The computer program product may further comprises code means configured to select the potential grill module assembly consisting of the chosen ventilation grill modules to be a designed ventilation grill assembly of said intake opening, to identify said designed ventilation grill assembly, to provide information relating to said designed ventilation grill assembly and to store said information to a database.

An advantage of the invention is, that it provides a reliable method and tool for evaluation and selection of ventilation grill modules to a given intake opening of a ventilation system.

A further advantage of the invention is, that it makes planning the ventilation grill assembly to an intake opening easier and faster thereby reducing planning costs.

# EP 4 160 106 A1

**Brief Description of Drawings**

In the following the invention will be described in detail, by way of examples, with reference to the accompanying drawings in which,

Fig. 1a   depicts an example of an intake opening of a ventilation system and a first ventilation module assembly installed therein,

Fig. 1b   depicts an example of an intake opening of a ventilation system and a second ventilation module assembly installed therein,

Fig. 1c   depicts an example of an intake opening of a ventilation system and a third ventilation module assembly installed therein and

Fig. 2   depicts an example of a method according to the invention as a flow chart.

**Detailed Description**

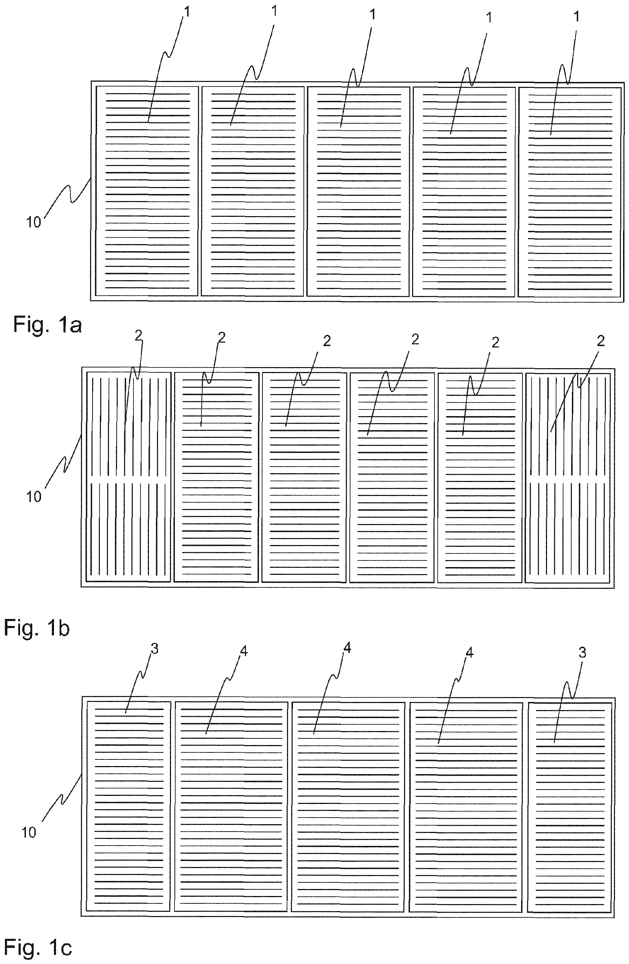

In figures 1a, 1b and 1c an example of an intake opening 10 of a ventilation system is shown. The intake opening is a rectangular aperture in the outer wall of the building wherein a ventilation system is installed. The size of intake opening depends on the required air inflow capacity of the intake opening. In large buildings the height H and the width W of the opening may be several meters.

In figs. 1a, 1b and 1c the size of the intake opening is the same. The height H of the opening may be for example 5450 mm and width 6320 mm. In fig. 1a a first ventilation grill assembly comprising five first ventilation grill modules 1 is shown. In fig. 1a each first ventilation grill module has same dimensions, i.e. same width and height. In fig. 1b a second ventilation grill assembly comprising six second ventilation grill modules is shown. Also in fig. 1b each second ventilation grill module 2 in the second ventilation grill assembly has the same width and height, but the orientation of the louvres of the grill modules next to the vertical edges of the intake opening differs from the orientation of the louvres of the ventilation grill modules in the middle of the intake opening. In fig. 1c a third ventilation grill assembly comprising five third and fourth ventilation grill modules. In this assembly the width of the third ventilation grill modules 3 next to the vertical edges of the intake opening is smaller than the width of the fourth ventilation modules 4 in the middle of the intake opening. As figures 1a, 1b and 1c demonstrate the intake opening can be covered with different ventilation grill assemblies comprising various number of ventilation grill modules having different dimensions, louvre type and/or orientation.

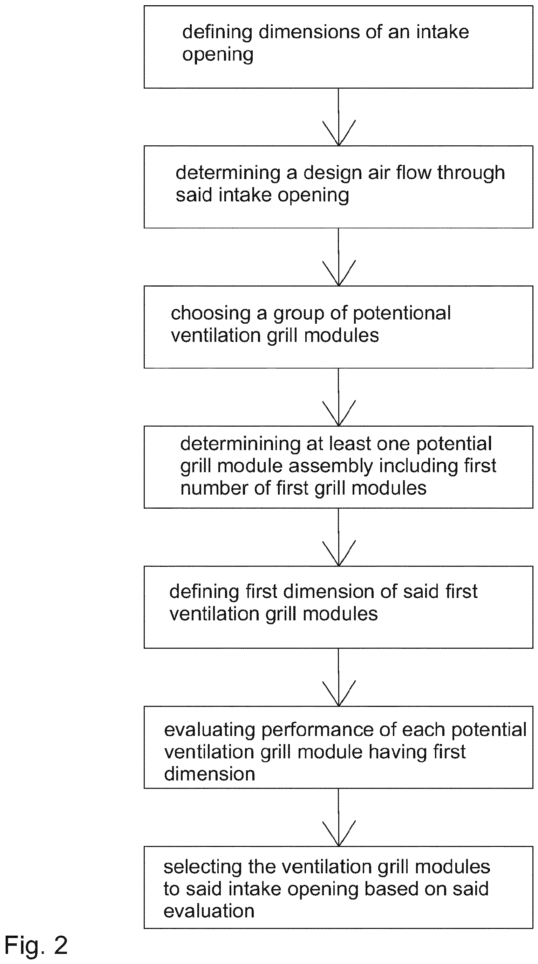

In fig. 2 an example of a method according to the invention is depicted as a flow chart. The method according to the invention comprises steps of defining dimensions of said intake opening and determining a design air flow value through said intake opening. Dimensions of the intake opening refer to dimensions of the area of the opening. The intake openings are usually rectangular, whereby the dimension comprise the width W and height H of the opening. The dimensions of the intake opening and the design air flow are usually expressed in the ventilation plans of the building whereby defining the dimensions of the intake opening and determining the design air flow may be done simply by reading these dimensions and values from the ventilation plans.

The method further comprises steps of choosing a group of potential ventilation grill modules and selecting the ventilation grill modules to said intake opening from said group of potential ventilation grill modules. A group of potential grill modules can be chosen of modules presented in a product collection of a single manufacturer, seller or importer of ventilation grill modules or a product collections of a plurality of manufactures, sellers or importers for example.

The method further comprises steps of determining at least one first potential grill module assembly to said intake opening. The first potential grill module assembly is a combination of a whole number of ventilation grill modules, which, when installed in place, cover the ventilation opening substantially in full. The first potential grill module assembly includes a first number of first grill modules.

Once the first number of the first potential grill modules is defined, the first dimensions of said first ventilation grill modules are defined by simple calculation. The dimensions include the width and height of individual ventilation grill modules. Installing the ventilation grill modules may require first building a supporting frame into the ventilation opening to which frame the individual ventilation grill modules are then secured. When calculation the dimensions of the first ventilation grill modules the space required by the possible supporting frame and the width of the mounting flanges of the ventilation grill modules is taken into account. Thus, the effective area of the sum of the first ventilation grill modules is less than the area of the intake opening.

Next step in the method is to evaluate the performance of each potential ventilation grill module having first dimensions. The evaluation is done by using the design air flow value determined earlies in the method. The evaluation reveals the suitability of the ventilation grill modules to the intake opening.

Finally, the ventilation grill modules to said intake opening are selected from said first group of potential ventilation grill modules. The selection is based on the evaluation of each ventilation grill module in the group of first potential grill modules.

The method according to the invention may further comprise steps of determining at least one second potential grill module assembly to said intake opening, which at least one second potential ventilation grill module assembly includes a second number of second grill modules. The second potential grill module assembly may comprise similar type of grill modules as the first potential grill module assembly whereby only the size, i.e. the dimension of the ventilation grill modules, are different. In this case the number of ventilation grill modules in the first and second potential grill module assembly is different. Alternatively or additionally the grill type, i.e. the form, shape or size of the ventilation openings and/or louvres in the first and second ventilation grill modules may be different. In this case the number of ventilation grill modules in the first and second potential grill module assembly may be the same or different.

Second dimensions of said second ventilation grill modules are defined and the performance of each potential ventilation grill module having second dimensions is evaluated using said design air flow value. Evaluating the performance of the second potential grill modules is done using same criterions as in the evaluation of the first potential grill modules. Ventilation grill modules are selected to said intake opening based on combined evaluation of the first and second potential ventilation grill modules, i.e. the ventilation grill modules selected to the intake opening may be first or second potential ventilation grill modules.

Preferably the method according to the invention further comprises steps of determining at least one third potential grill module assembly to said intake opening, which at least one third potential ventilation grill module assembly includes a third number of third grill modules and a fourth number of fourth grill modules. In this embodiment the number of third and fourth grill modules is more than zero, i.e. the third potential grill module assembly comprises grill modules having different sizes. The type of the third and fourth ventilation grill modules may also be different. Third dimensions for said third ventilation grill modules and fourth dimensions for said fourth ventilation grill modules are defined and the performance of each potential ventilation grill module having third or fourth dimensions is evaluated using the design air flow value determined earlier. Evaluating the performance of the third and fourth potential grill modules is done using same criterions as in the evaluation of the first and second potential grill modules. Ventilation grill modules are selected to said intake opening based on combined evaluation of the first, second, third or fourth potential ventilation grill modules, i.e. the ventilation grill modules selected to the intake opening may be first, second, third or fourth potential ventilation grill modules.

In the method it is not necessary to use the design air flow read from the ventilation plans but it may be determined with the aid of the calculated noise level, i.e. sound pressure level caused by the ventilation grill module assembly in certain inspection point. In a preferred embodiment of the method according to the invention determining said design air flow value through said intake opening comprises steps of choosing an upper limit value for the noise level of the ventilation grill module assembly and calculating the design air flow through said intake opening, said design air flow causing noise level below said upper limit value. The upper limit value for the noise level is usually indirectly governed by the acceptable or desirable noise level in neighbouring buildings. Preferably the noise level, i.e. the noise pressure level of the ventilation grill assembly does not cause noise pressure levels exceeding 45 dB in the windows of neighbouring buildings. Sound pressure can be calculated form the equation

$$Lp = Lw + 10 \lg (Q/4pr^2)$$

wherein,

Lp = Sound pressure level, dB
Lw = Sound power level, dB
Q = solid angle, into which the sound spreads, rad
r = distance from the ventilation grill assembly to the inspection point, for example in a neighbouring building

In yet another preferred embodiment of the method according to the invention the design air flow is not taken directly from the ventilation plans but it is determined with the aid of pressure loss through said intake opening. In this embodiment determining said design air flow value through said intake opening comprises steps of choosing an upper limit value for the pressure loss through said intake opening and calculating the design air flow through said intake opening, said design air flow causing pressure loss below said upper limit value. The upper limit of the pressure loss may be governed by the capacity or efficiency of the ventilation device of the ventilation system.

The purpose of the ventilation grill modules is to prevent rainwater and snow entering to the ventilation system through intake opening. On way to advance achieving this aim is to use sufficiently low face-velocity in the intake opening.

Face-velocity $v_f$ is calculated from an equation $v_f = q_v* A$, wherein

$$q_v = \text{air flow, m}^3\text{/s}$$

A = area of the intake opening, $m^2$

For adequate rainwater retention the face-velocity should not exceed 2 m/s and for proper snow retention the face-velocity should be below 0,7 m/s.

Preferably the method according to the invention further comprises steps of choosing an upper limit value for a face velocity of said intake opening, calculating the face velocity of said intake opening using said design air flow value, checking, that the calculated face velocity of said intake opening is lower than said upper limit value and diminishing the design air flow value, if the calculated face velocity of said intake opening is bigger than said upper limit value. After diminishing the design air flow the face velocity of said intake opening is re-calculated using said diminished design air flow value and re-checked if the re-calculated face velocity of said intake opening is lower than said upper limit value. These steps are repeated until the calculated face velocity of said intake opening is lower than said upper limit value.

In large intake openings, wherein several ventilation grill modules are used to cover the opening, the area covered by the possible supporting frame and the width of the mounting flanges of the ventilation grill modules reduces the effective area of the individual ventilation grill modules. Consequently, the face velocity calculated for the whole intake opening and the face velocities calculated for individual ventilation grill modules may sometimes differ significantly. Therefore, evaluating the performance of potential ventilation grill modules and selecting the ventilation modules preferably comprises steps of calculating face velocity for each potential ventilation grill module, choosing an upper limit value for the face velocity of the ventilation grill module, comparing the calculated face velocity of each potential ventilation grill modules to said upper limit value and selecting the ventilation grill module to said intake opening from the group of those potential ventilation grill modules having lower face velocity than said upper limit value. Preferably, the upper limit value for the face velocity of the intake opening and/or of the ventilation grill module is chosen to be 2 m/s, preferably 0,7 m/s.

Alternatively or additionally evaluating the performance of potential ventilation grill modules and selecting the ventilation modules may comprise steps of calculating noise levels for each potential ventilation grill module and selecting the ventilation grill module to said intake opening from the group of those potential ventilation grill modules having one of the lowest calculated noise levels, preferably the lowest calculated noise level. Ideally, selecting the ventilation grill module to said intake opening having the lowest calculated noise level should be possible. However, selecting a ventilation grill module having not the lowest but still adequate calculated noise level can sometimes be justified.

The pressure loss, air flow and noise level, i.e. sound pressure level, are all ventilation grill module specific quantities, which depend from each other. Manufactures of the ventilation grill modules provide tables, from which a third quantity can be determined, when one or two other quantities are known or selected. An example of a table of one potential ventilation grill module is shown below. For example, when the air flow is known, the known air flow value is chosen from the x-axis, a vertical going via said air flow value is drawn and the crossing point of said vertical and the oblique line of a potential ventilation grill module is determined. The pressure loss of said ventilation grill module is read from the Y-axis.

Table 1: Exemplary pressure loss- air flow- noise pressure level –relationship.

Alternatively or additionally evaluating the performance of potential ventilation grill modules and selecting the ventilation modules may comprise steps of calculating pressure loss for each potential ventilation grill module and selecting the ventilation grill module to said intake opening from the group of those potential ventilation grill modules having one of the lowest calculated pressure losses, preferably the lowest calculated press loss.

Alternatively or additionally evaluating the performance of potential ventilation grill modules and selecting the ventilation modules may comprise steps of determining storm-water retention efficiency class for each potential ventilation grill module and selecting the ventilation grill module to said intake opening from the group of those potential ventilation grill modules having one of the highest storm-water retention efficiency classes, preferably the highest storm-water retention efficiency class. Storm-water retention class is a module specific value, which is measured according to European Standard EN 13030:2001 "Ventilation for buildings-Terminals- Performance testing of louvres subjected to simulated rain". According to this Standard the storm-water retention class of the ventilation grill modules may be A, B, C or D depending to measured storm-water retention effectiveness as depicted in table 2. Thus, in the method determining the storm-water retention class is done by reading the class from the technical information of the ventilation grill module, which information is provided by the manufacturer of the module.

Table 2. Storm-water retention class of the ventilation grill modules.

| Class | Effectiveness, % |
|-------|------------------|
| A | 100 - 99 |
| B | 98,9 - 95 |
| C | 94,9 - 80 |
| D | below 80 |

Preferably the method according to the invention further comprises steps of selecting the potential grill module assembly consisting of the chosen ventilation grill modules to be a designed ventilation grill assembly of said intake opening, identifying said designed ventilation grill assembly, providing information relating to said designed ventilation grill assembly and storing said information to a database. The designed ventilation grill assembly may be identified by a given name or by a given serial number. Preferably, the stored information is linked or attached to the planning, order or delivery information of the ventilation system.

Preferably, providing information relating to said designed ventilation grill assembly comprises providing installation instructions of said designed ventilation grill assembly to said ventilation opening and/or providing installation instructions for each individual ventilation grill module in the designed grill module assembly. The installation instructions include at least one of the following: location of the ventilation grill module in the designed grill module assembly, orientation of the ventilation grill module in the designed grill module assembly, installation order of the ventilation grill modules in the designed grill module assembly.

The method steps of the invention are implemented with a computer program product. The computer program product comprises program code means, which are configured to carry out the method steps, when the program is executed in a processor of a computer. The method and the computer program with which the method is implemented helps the designer to make rational and reasoned selections, when designing a ventilation system of a space.

The method according to the invention may further comprise steps of collecting a delivery patch of ventilation grill modules comprising all ventilation grill modules in at least one designed grill module assembly and labeling each ventilation grill module in said delivery batch with a label including said installation information. The label may comprise readable text and numbers, machine readable pattern, such as barcode or QR-code or electronic information storing means, such as RFID- tags.

Some preferred embodiments of the method and computer program product according to the invention has been disclosed above. The invention is not limited to the solutions explained above, but the invention can be applied in different ways within the limits set by the patent claims.

**Claims**

1. A method for selecting ventilation grill modules (1, 2, 3, 4) to an intake opening (10) of a ventilation system, said method comprising steps of

   - defining dimensions of said intake opening (10),
   - determining a design air flow value through said intake opening,
   - choosing a group of potential ventilation grill modules (1, 2, 3, 4) and
   - selecting the ventilation grill modules (1, 2, 3, 4) to said intake opening (10) from said group of potential ventilation grill modules (1, 2, 3, 4),

   **characterized in, that** said method further comprises steps of

   - determining at least one first potential grill module assembly to said intake opening (19), which first potential grill module assembly includes a first number of first grill modules (1),
   - defining first dimensions of said first ventilation grill modules (1),
   - evaluating performance of each potential ventilation grill module (1) having first dimensions using said design air flow value and
   - selecting the ventilation grill modules (1) to said intake opening based on said evaluation.

2. A method according to claim 1, **characterized in that**, the method further comprises steps of

   - determining at least one second potential grill module assembly to said intake opening (10), which at least one second potential ventilation grill module assembly includes a second number of second grill modules (2),
   - defining second dimensions of said second ventilation grill modules (2),
   - evaluating performance of each potential ventilation grill module (2) having second dimensions using said design air flow value and
   - selecting ventilation grill modules (1,2) to said intake opening (10) based on said evaluation.

3. A method according to claim 1 or 2, **characterized in that**, the method further comprises steps of

   - determining at least one third potential grill module assembly to said intake opening, which at least one third potential ventilation grill module assembly includes a third number of third grill modules (3) and a fourth number of fourth grill modules (4),
   - defining third dimensions for said third ventilation grill modules (3) and fourth dimensions for said fourth ventilation grill modules (4),
   - evaluating performance of each potential ventilation grill module (3, 4) having third or fourth dimensions using said design air flow value and
   - selecting ventilation grill modules (1, 2, 3, 4,) to said intake opening (10) based on said evaluation.

**4.** A method according to any of the claims 1 to 3, **characterizing in that**, determining said design air flow value through said intake opening (10) comprises steps of

- choosing an upper limit value for the noise level of the ventilation grill module assembly and
- calculating the design air flow through said intake opening (10), said design air flow causing noise level below said upper limit value

or

- choosing an upper limit value for the pressure loss through said intake opening (10) and
- calculating the design air flow through said intake opening (10), said design air flow causing pressure loss below said upper limit value.

**5.** A method according to any of the claims 1 to 4, **characterizing in that**, the method further comprises steps of

- choosing an upper limit value for a face velocity of said intake opening (10),
- calculating the face velocity of said intake opening (10) using said design air flow value,
- checking, that the calculated face velocity of said intake opening (10) is lower than said upper limit value,
- diminishing the design air flow value, if the calculated face velocity of said intake opening (10) is bigger than said upper limit value,
- re-calculating the face velocity of said intake opening (10) using said diminished design air flow value and
- re-checking, that the re-calculated face velocity of said intake opening (10) is lower than said upper limit value.

**6.** A method according to any of the claims 1 to 5, **characterized in that**, evaluating said performance of potential ventilation grill modules (1, 2, 3, 4) and selecting the ventilation modules (1, 2, 3, 4) comprises steps of

- calculating face velocity for each potential ventilation grill module (1, 2, 3, 4),
- choosing an upper limit value for the face velocity of the ventilation grill module (1, 2, 3, 4),
- comparing the calculated face velocity of each potential ventilation grill module (1, 2, 3, 4) to said upper limit value and
- selecting the ventilation grill module (1, 2, 3, 4) to said intake opening (10) from the group of those potential ventilation grill modules (1, 2, 3, 4) having lower face velocity than said upper limit value.

**7.** A method according to any of the claims 1 to 6, **characterized in that**, evaluating said performance of potential ventilation grill modules (1, 2, 3, 4) and selecting the ventilation modules (1, 2, 3, 4) comprises steps of

- calculating noise levels for each potential ventilation grill module (1, 2, 3, 4) and
- selecting the ventilation grill module (1, 2, 3, 4) to said intake opening (10) from the group of those potential ventilation grill modules (1, 2, 3, 4) having one of the lowest calculated noise levels, preferably the lowest calculated noise level

or

- calculating pressure loss for each potential ventilation grill module (1, 2, 3, 4) and
- selecting the ventilation grill module (1, 2, 3, 4) to said intake opening (10) from the group of those potential ventilation grill modules (1, 2, 3, 4) having one of the lowest calculated pressure losses, preferably the lowest calculated press loss

or

- determining storm-water retention efficiency class for each potential ventilation grill module (1, 2, 3, 4) and
- selecting the ventilation grill module (1, 2, 3, 4) to said intake opening (10) from the group of those potential ventilation grill modules (1, 2, 3, 4) having one of the highest storm-water retention efficiency classes, preferably the highest storm-water retention efficiency class.

**8.** A computer program product for selecting ventilation grill modules (1, 2, 3, 4) to an intake opening (10) of a ventilation system, said computer program product comprising

- code means configured to define dimensions of said intake opening (10),
- code means configured to determine a design air flow value through said intake opening (10),
- code means configured to choose a group of potential ventilation grill modules (1, 2, 3, 4) and
- code means configured to select the ventilation grill modules (1, 2, 3, 4) to said intake opening (10) from said group of potential ventilation grill modules (1, 2, 3, 4), **characterized in, that** said computer program further comprises

- code means configured to determine a least one first potential grill module assembly to said intake opening (10), which first potential grill module assembly includes a first number of first grill modules (1),
- code means configured to define first dimensions of said first ventilation grill modules (1),
- code means configured to evaluate performance of each potential ventilation grill module (1) having first dimensions using said design air flow value and
- code means configured to select the ventilation grill modules (1) to said intake opening (10) based on said evaluation.

9. A computer program product according to claim 8, **characterized in that**, said computer program further comprises

- code means configured to determine at least one second potential grill module assembly to said intake opening (10), which at least one second potential ventilation grill module assembly includes a second number of second grill modules (2),
- code means configured to define second dimensions of said second ventilation grill modules (2),
- code means configured to evaluate performance of each potential ventilation grill module (2) having second dimensions using said design air flow value and
- code means configured to select ventilation grill modules (1, 2) to said intake opening (10) based on said evaluation.

10. A computer program product according to claim 8 or 9, **characterized in that**, said computer program further comprises

- code means configured to determine at least one third potential grill module assembly to said intake opening (10), which at least one third potential ventilation grill module assembly includes a third number off third grill modules (3) and a fourth number of fourth grill modules (4),
- code means configured to define third dimensions for said third ventilation grill modules (3) and fourth dimensions for said fourth ventilation grill modules (4),
- code means configured to evaluate performance of each potential ventilation grill module (3, 4) having third or fourth dimensions using said design air flow value and
- code means configured to select ventilation grill modules (1, 2, 3, 4) to said intake opening (10) based on said evaluation.

11. A computer program product according to any of the claims 8 to 10, **characterizing in that**, said code means configured to determine said design air flow value through said intake opening (10) comprises code means configured to

- choose an upper limit value for the noise level of the ventilation grill module assembly and
- calculate the design air flow through said intake opening (10), said design air flow causing noise level below said upper limit value

or

code means configured to

- choose an upper limit value for the pressure loss through said intake opening (10) and
- calculate the design air flow through said intake opening (10), said design air flow causing pressure loss below said upper limit value.

12. A computer program product according to any of the claims 8 to 11, **characterizing in that**, said computer program further comprises

- code means configured to choose an upper limit value for a face velocity of said intake opening (10),
- code means configured to calculate the face velocity of said intake opening (10) using said design air flow value,
- code means configured to check, that the calculated face velocity of said intake opening (10) is lower than said upper limit value,
- code means configured to diminish the design air flow value, if the calculated face velocity of said intake opening (10) is bigger than said upper limit value,
- code means configured to re-calculate the face velocity of said intake opening (10) using said diminished design air flow value and

- code means configured to re-check, that the re-calculated face velocity of said intake opening (10) is lower than said upper limit value.

13. A computer program product according to any of the claims 8 to 12, **characterized in that**, said code means configured to evaluate said performance of potential ventilation grill modules (1, 2, 3, 4) and to select the ventilation modules (1, 2, 3, 4) comprises code means configured to

- calculate face velocity for each potential ventilation grill module (1, 2, 3, 4),
- choose an upper limit value for the face velocity of the ventilation grill module (1, 2, 3, 4),
- compare the calculated face velocity of each potential ventilation grill module (1, 2, 3, 4) to said upper limit value and
- select the ventilation grill module to said intake opening (10) from the group of those potential ventilation grill modules (1, 2, 3, 4) having lower face velocity than said upper limit value.

14. A computer program product according to any of the claims 8 to 13, **characterized in that**, said code means configured to evaluate said performance of potential ventilation grill modules (1, 2, 3, 4) and to select the ventilation grill modules (1, 2, 3, 4) comprises code means configured to

- calculate noise levels for each potential ventilation grill module (1, 2, 3, 4) and
- select the ventilation grill module (1, 2, 3, 4) to said intake opening (10) from the group of those potential ventilation grill modules (1, 2, 3, 4) having one of the lowest calculated noise levels, preferably the lowest calculated noise level.

15. A computer program product according to any of the claims 8 to 14, **characterized in that**, said code means configured to evaluate said performance of potential ventilation grill modules (1, 2, 3, 4) and to select the ventilation grill modules (1, 2, 3, 4) comprises code means configured to

- calculate pressure loss for each potential ventilation grill module (1, 2, 3, 4) and
- select the ventilation grill module (1, 2, 3, 4) to said intake opening (10) from the group of those potential ventilation grill modules (1, 2, 3, 4) having one of the lowest calculated pressure losses, preferably the lowest calculated press loss.

16. A computer program product according to any of the claims 8 to 15, **characterized in that**, said code means configured to evaluate said performance of potential ventilation grill modules (1, 2, 3, 4) and to select the ventilation grill modules (1, 2, 3, 4) comprises code means configured to

- determine storm-water retention efficiency class for each potential ventilation grill module (1, 2, 3, 4) and
- select the ventilation grill module (1, 2, 3, 4) to said intake opening (10) from the group of those potential ventilation grill modules (1, 2, 3, 4) having one of the highest storm-water retention efficiency classes, preferably the highest storm-water retention efficiency class.

Fig. 1a

Fig. 1b

Fig. 1c

defining dimensions of an intake opening

$\downarrow$

determining a design air flow through said intake opening

$\downarrow$

choosing a group of potentional ventilation grill modules

$\downarrow$

determinining at least one potential grill module assembly including first number of first grill modules

$\downarrow$

defining first dimension of said first ventilation grill modules

$\downarrow$

evaluating performance of each potential ventilation grill module having first dimension

$\downarrow$

selecting the ventilation grill modules to said intake opening based on said evaluation

Fig. 2

Europäisches
Patentamt

European
Patent Office

Office européen
des brevets

# EUROPEAN SEARCH REPORT

Application Number

EP 22 19 4423

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 832 223 A1 (CLIMECON OY [FI]) 9 June 2021 (2021-06-09) * paragraphs [0006] – [0032]; figures 1,2 * | 1-16 | INV. F24F13/08 G06Q50/08 |
| A | US 2014/121842 A1 (NODSON JOHN [US]) 1 May 2014 (2014-05-01) * paragraphs [0008] – [0032]; figures 1, 2 * | 1-16 | |
| A | HILL T B ET AL: "DESIGNING VENTILATION GRILLES FOR ELECTRONIC EQUIPMENT", MACHINE DESIGN, PENTON MEDIA, CLEVELAND, OH, US, vol. 62, no. 16, 9 August 1990 (1990-08-09), pages 73-77, XP000151360, ISSN: 0024-9114 * pages 73-77 * | 1-16 | |

TECHNICAL FIELDS
SEARCHED     (IPC)

F24F
G06Q

The present search report has been drawn up for all claims

| Place of search | Date of completion of the search | Examiner |
|---|---|---|
| Munich | 19 January 2023 | Ismail, Youssef |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons
................................................................
& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

**EP 22 19 4423**

This annex lists the patent family members relating to the patent documents cited in the above-mentioned European search report.
The members are as contained in the European Patent Office EDP file on
The European Patent Office is in no way liable for these particulars which are merely given for the purpose of information.

**19-01-2023**

| Patent document cited in search report | | Publication date | Patent family member(s) | | Publication date |
|---|---|---|---|---|---|
| EP 3832223 | A1 | 09-06-2021 | EP<br>FI | 3832223 A1<br>20196051 A1 | 09-06-2021<br>15-03-2021 |
| US 2014121842 | A1 | 01-05-2014 | NONE | | |

For more details about this annex : see Official Journal of the European Patent Office, No. 12/82